(19) Europäisches Patentamt
European Patent Office
Office européen des brevets

(11)  **EP 2 761 048 B1**

(12)  **FASCICULE DE BREVET EUROPEEN**

(45) Date de publication et mention
de la délivrance du brevet:
**29.05.2019   Bulletin 2019/22**

(21) Numéro de dépôt: **12769396.8**

(22) Date de dépôt: **28.09.2012**

(51) Int Cl.:
*C23C 8/02* (2006.01)    *C23C 8/38* (2006.01)
*C23C 8/26* (2006.01)    *C23C 8/22* (2006.01)
*C21D 6/00* (2006.01)    *C21D 8/02* (2006.01)
*C21D 9/08* (2006.01)    *G21C 3/07* (2006.01)
*G21C 21/18* (2006.01)    *G21C 7/10* (2006.01)

(86) Numéro de dépôt international:
**PCT/EP2012/069254**

(87) Numéro de publication internationale:
**WO 2013/045655 (04.04.2013 Gazette 2013/14)**

(54) **PROCÉDÉ DE RÉALISATION D'UNE PIÈCE EN ACIER INOXYDABLE RÉSISTANT À L'USURE ET À LA CORROSION POUR RÉACTEUR NUCLÉAIRE, PIÈCE ET GRAPPE DE COMMANDE CORRESPONDANTES**

VERFAHREN ZUR HERSTELLUNG EINES VERSCHLEISSFESTEN UND KORROSIONSBESTÄNDIGE EDELSTAHLBAUTEILS EINES KERNREAKTORS, BAUTEIL UND ENTSPRECHENDER STEUERCLUSTER

PROCESS FOR PRODUCING A WEAR-RESISTANT AND CORROSION-RESISTANT STAINLESS STEEL PART FOR A NUCLEAR REACTOR, CORRESPONDING PART AND CORRESPONDING CONTROL CLUSTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **30.09.2011  FR 1158858**

(43) Date de publication de la demande:
**06.08.2014   Bulletin 2014/32**

(73) Titulaire: **FRAMATOME**
**92400 Courbevoie (FR)**

(72) Inventeur: **HERTZ, Dominique**
**F-69110 Sainte Foy Les Lyon (FR)**

(74) Mandataire: **Lavoix**
**2, place d'Estienne d'Orves**
**75441 Paris Cedex 09 (FR)**

(56) Documents cités:
**FR-A1- 2 604 188     JP-A- 2008 031 522**

- **OLFE J ET AL: "Wear protection and corrosion resistance of austenitic stainless steel due to plasma nitriding", VAKUUM IN FORSCHUNG UND PRAXIS, WILEY-VCH, WEINHEIM, DE, vol. 12, no. 4, 1 août 2000 (2000-08-01), pages 253-258, XP002551004, ISSN: 0947-076X, DOI: 10.1002/1522-2454(200008)12:4<253::AID-VIP R253>3.0.CO;2-7 [extrait le 2000-12-01]**

Remarques:
Le dossier contient des informations techniques présentées postérieurement au dépôt de la demande et ne figurant pas dans le présent fascicule.

EP 2 761 048 B1

**Description**

La présente invention concerne la réalisation de pièces en acier inoxydable dont la tenue à l'usure et à la corrosion est améliorée par un traitement de durcissement par diffusion d'espèce(s) atomique(s).

L'invention s'applique notamment à la réalisation de crayons absorbant les neutrons destinés à être utilisés dans des réacteurs à eau légère (REL ou LWR - Light Water Reactor en anglais), notamment à eau pressurisée (REP ou PWR - Pressurized Water Reactor).

Les crayons absorbant les neutrons sont habituellement regroupés en grappes de commande. Parmi ces grappes, certaines sont fréquemment déplacées en fonctionnement dans des guides sur lesquels elles frottent. Ces grappes vibrent également sous l'effet de l'écoulement de l'eau. Leurs crayons risquent donc de s'user et de perdre une partie de leur capacité d'absorption neutronique, essence même de la sûreté du réacteur. Les gaines et les bouchons des crayons absorbant les neutrons sont particulièrement soumis à ce risque d'usure.

La fréquence et l'amplitude des déplacements de certains de ces crayons absorbants, notamment lorsque le réacteur est utilisé en suivi de charge, la fréquence et l'amplitude des vibrations de certains de ces crayons absorbants, notamment pour les grappes restant en position stationnaire, sont telles qu'il est nécessaire de contrôler fréquemment et remplacer prématurément un certain nombre de grappes compte tenu de l'usure découlant des frottements.

Pour lutter contre cette usure, il a été proposé de durcir par nitruration la surface extérieure des gaines. Les documents FR-2 604 188, EP-446 083, EP-537 062 et EP-801 142 décrivent ainsi des étapes de nitruration par plasma.

De telles étapes de nitruration permettent de protéger efficacement contre l'usure les gaines des crayons absorbants.

Cependant, on a constaté que certaines surfaces ainsi nitrurées présentaient une résistance à la corrosion insuffisante et que de la rouille pouvait apparaître après fabrication, lors du transport, lors du stockage ou encore lors de la mise en service des grappes de commande.

L'article J. Olfe et al.: « Verschleißschutz und korrosionsbeständigkeit von austenitischem Stahl durch Plasmadiffusionsbehandlung » décrit un procédé de nitruration d'un acier inoxydable austénitique.

Un des buts de l'invention est de pallier cet inconvénient en proposant un procédé permettant de réaliser des pièces présentant une bonne résistance à l'usure ainsi qu'une bonne résistance à la corrosion.

A cet effet, l'invention concerne un procédé de réalisation d'une pièce en acier inoxydable résistant à l'usure et à la corrosion pour réacteur nucléaire selon la revendication 1.

Selon d'autres caractéristiques facultatives, le procédé présente l'une ou plusieurs des caractéristiques des revendications 2 à 12.

L'invention concerne également une pièce selon la revendication 13.

L'invention concerne en outre une grappe de commande selon la revendication 14.

D'autres aspects et avantages de l'invention apparaîtront à la lecture de la description qui suit, donnée uniquement à titre d'exemple et faite en se référant aux dessins annexés, sur lesquels :

- la figure 1 est une vue schématique partielle et en coupe illustrant un crayon absorbant d'une grappe de commande suivant l'invention,
- la figure 2 présente les courbes intensité/potentiel pour des gaines en AISI 316L avant et après nitruration,
- les figures 3 à 5 présentent des courbes issues de tests potentiostatiques réalisés sur des gaines nitrurées, les figures 3 à 5 correspondant à différentes compositions d'aciers austénitiques et différentes conditions de nitruration,
- la figure 6 présente des courbes intensité/potentiel pour des gaines issues d'ébauches soudées et non-soudées avant nitruration,
- la figure 7 est une vue analogue à la figure 6 pour des gaines issues d'ébauches soudées et non-soudées après nitruration.

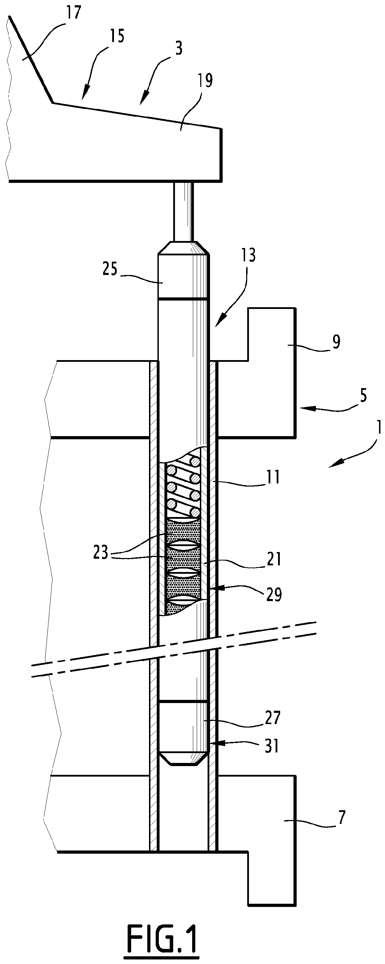

Sur la figure 1 on distingue une partie d'un assemblage 1 de combustible nucléaire et une partie d'une grappe 3 de commande de la réactivité du coeur d'un réacteur nucléaire dans lequel l'assemblage 1 est chargé.

De manière classique, l'assemblage 1 comprend un faisceau de crayons de combustible nucléaire (non représentés) et un squelette 5 de support et de maintien de ce faisceau. Le squelette 5 comprend un embout inférieur 7, un embout supérieur 9 et des tubes-guides 11 qui relient l'embout inférieur 7 et l'embout supérieur 9. Un seul tube-guide 11 est représenté sur la figure 1.

La grappe de commande 3 comporte des crayons 13 absorbant les neutrons, dont un seul est visible sur la figure 1, et une araignée 15 assurant le support et le maintien des crayons absorbants 13 pour qu'ils soient parallèles entre eux et positionnés latéralement suivant le même réseau que les tubes-guides 11 de l'assemblage 1 que la grappe de commande 3 surmonte.

L'araignée 15 comprend un pommeau 17 permettant de raccorder la grappe de commande 3 à un mécanisme de déplacement (non-représenté) et des ailettes 19 solidaires du pommeau 17 et sur chacune desquelles sont fixés un ou plusieurs crayon(s) absorbant(s) 13.

Le crayon 13 représenté sur la figure 1 comporte une gaine 21 renfermant au moins un matériau absorbant les neutrons, par exemple sous la forme d'un empilement de pastilles 23 en carbure de bore $B_4C$. La gaine 21 est un tube, par exemple de 3,8 m de longueur, de 9,70 mm de diamètre extérieur et de 0,5mm d'épaisseur. La gaine 21 est fermée par un bouchon supérieur 25 et par un bouchon inférieur 27. L'extrémité inférieure du bouchon inférieur 27 converge par exemple vers le bas.

De manière classique, pour régler la réactivité du réacteur, la grappe de commande 3 va être insérée ou extraite du coeur du réacteur, de sorte que les crayons absorbants 13 sont déplacés à l'intérieur des tubes-guides 11 correspondants ainsi que le long de guides (non-représentés) placés dans les internes supérieurs du réacteur.

La gaine 21 est réalisée par exemple à partir d'acier inoxydable austénitique de type AISI 304 ou AISI 316, en général bas carbone AISI 304L ou AISI 316L. Le bouchon 27 est réalisé par exemple à partir d'un acier inoxydable austénitique AISI 308, en général bas carbone AISI 308L. Les compositions (en % masse après coulée) de ces aciers sont détaillées dans le tableau 1 :

Tableau 1

| Elément | AISI 316L Norme DIN 1.4311 | | AISI 304L Norme DIN 1.4311 | | AISI 308L Norme DIN 1.4303 | |
|---|---|---|---|---|---|---|
| | Minimum | Maximum | Minimum | Maximum | Minimum | Maximum |
| Carbone | | 0.03 | | 0.03 | | 0.03 |
| Manganèse | | 2.00 | | 2.00 | - | 2.00 |
| Phosphore | | 0.05 | | 0.05 | | 0.05 |
| Soufre | | 0.03 | | 0.03 | | 0.03 |
| Silicium | | 1.00 | | 1.00 | | 1.00 |
| Cobalt | | 0.04 | | 0.04 | | 0.12 |
| Nickel | 10.00 | 14.00 | 8.50 | 11.50 | 10.00 | 12.00 |
| Chrome | 16.50 | 18.50 | 17.00 | 19.00 | 19.00 | 21.00 |
| Molybdène | 2.00 | 2.50 | | | | |

le reste étant du fer et des impuretés résultant de l'élaboration.

Plus généralement, la gaine 21 est réalisée en acier inoxydable austénitique avec, de préférence, une teneur massique en carbone inférieure ou égale à 0,03%. Elle peut également être réalisée en d'autres types d'acier inoxydable, de préférence bas carbone.

De préférence également, la gaine 21 est réalisée à partir d'une ébauche tubulaire dépourvue de soudure. Elle peut aussi être réalisée à partir d'une ébauche roulée-soudée par exemple, si des traitements thermiques ont permis de remettre en solution les précipités, notamment de carbures et nitrures de chrome et de molybdène, ce qui est le cas du traitement d'hypertrempe décrit ultérieurement.

La gaine 21 a par exemple été obtenue à partir d'un procédé de réalisation comprenant les étapes suivantes :

- fourniture d'une ébauche tubulaire en acier inoxydable austénitique ayant éventuellement subi une hypertrempe c'est-à-dire au sens de la présente description un traitement comprenant :

  • un chauffage de l'ébauche tubulaire à une température et pendant une durée suffisantes pour mettre en solution les précipités, notamment les carbures et nitrures de chrome et de molybdène, puis
  • une trempe de l'ébauche tubulaire à une vitesse permettant de conserver ensuite à température ambiante la structure austénitique à l'état métastable et exempte de précipités,

- façonnage de l'ébauche, cette étape comprenant des sous-étapes de :

  • si l'ébauche tubulaire n'a pas subi une hypertrempe, mise en oeuvre d'une telle hypertrempe,
  • exécution d'un ou plusieurs cycles d'étirage ou de laminage à froid suivi chacun d'une hypertrempe,
  • étirage final,

- finition, cette étape de finition pouvant comprendre des sous-étapes de :

EP 2 761 048 B1

- dressage,
- polissage sur bandes abrasives et roue,
- contrôles, et/ou
- décapage/passivation.

Pour ce qui concerne les hypertrempes décrites ci-dessus, le chauffage est assuré de préférence à une température strictement supérieure à 1020°C, de préférence supérieure à 1040°C, de préférence inférieure à 1100°C, et de préférence encore inférieure à 1080°C.

La durée de chauffage est par exemple comprise entre 1 minute 30 secondes pour une ébauche de faible épaisseur (de l'ordre du mm) et 30 minutes pour une ébauche de plus forte épaisseur (de l'ordre du cm) et de préférence entre 3 et 10 minutes. La durée du chauffage, en particulier pour les derniers traitements thermiques ne doit pas être trop importante pour limiter le grossissement des grains, grossissement qui pourrait être préjudiciable aux propriétés du composant fini.

La trempe est de préférence assurée pour éviter le maintien de l'acier à une température de 450 à 800°C, domaine de précipitation des nitrures et des carbures de chrome. Si la charge du four est faible, par exemple de quelques ébauches non réunies en fagot, une trempe au gaz, de préférence neutre ou non-oxydant, suffit à assurer le refroidissement sans précipitation. La vitesse critique de trempe dépend de la teneur en carbone de l'acier : elle est d'autant plus élevée que la teneur en carbone est élevée. Ainsi, pour une teneur massique de 0.03% de carbone, la température descendra au cours de la trempe de la température de début de trempe jusqu'à une température en dessous de 850°C de préférence en moins de 3 minutes et de la température de début de trempe à une température en dessous de 450°C de préférence en moins d'un quart d'heure pour une ébauche de faible épaisseur (de l'ordre du mm) et d'une heure pour une ébauche de plus forte épaisseur (de l'ordre du cm)

Le tableau 2 présente deux exemples d'enchaînement d'étapes de façonnage et de finition d'une ébauche tubulaire en acier inoxydable austénitique dépourvue de soudure afin de réaliser une gaine 21. A l'issue de ces différentes opérations, la gaine 21 obtenue sera soumise, après soudage au bouchon inférieur 27, à un durcissement de sa surface extérieure (29) par diffusion d'espèce(s) atomique(s). Ce traitement de durcissement sera décrit ultérieurement.

Tableau 2

| Opération | Conditions | |
| --- | --- | --- |
| | Exemple 1 | Exemple 2 |
| Fourniture d'ébauches en acier inoxydable austénitique | Diamètre extérieur de 21,30 mm, épaisseur de 1,60 mm | Diamètre extérieur de 16 mm, épaisseur de 1 mm |
| Laminage à froid | Laminage jusqu'à un diamètre extérieur de 12,7 mm et un diamètre intérieur de 11,40 mm | / |
| Hypertrempe | Chauffage à $1050\pm50$°C sous $H_2$ pendant 1 min 30 s à 5 min, Trempe permettant de refroidir de 900 à 450°C en moins de 5 min | / |
| Etirage à froid | Etirage jusqu'à un diamètre extérieur de 10,57mm et un diamètre intérieur de 9,60mm | Etirage jusqu'à un diamètre extérieur de 13,35 mm et un diamètre intérieur de 12 mm |
| Hypertrempe | Chauffage à $1050\pm50$°C sous $H_2$ pendant 1 min 30 s à 5 min, Trempe permettant de refroidir de 900 à 450°C en moins de 5 min | Chauffage à $1060\pm50$°C sous $H_2$ pendant 1 min 30 s à 5 min, Trempe permettant de refroidir de 900 à 450°C en moins de 5 min |
| Etirage à froid | Etirage jusqu'à un diamètre extérieur de 9,65 mm et un diamètre intérieur de 8,75 mm | Etirage jusqu'à un diamètre extérieur de 11,35mm et un diamètre intérieur de 10,45mm |
| Hypertrempe | / | Chauffage à $1060\pm50$°C sous $H_2$ pendant 1 min 30 s à 5 min, Trempe permettant de refroidir de 900 à 450°C en moins de 5 min |

(suite)

| Opération | Conditions | |
|---|---|---|
| | Exemple 1 | Exemple 2 |
| Etirage à froid | / | Etirage jusqu'à un diamètre extérieur de 9,7 mm et un diamètre intérieur de 8,70 mm |
| Dressage | Oui | Oui |
| Polissage | Oui | Oui |
| Contrôle | Oui | Oui |
| Mise à longueur | Oui | Oui |
| Décapage - passivation | / | Oui |
| Polissage final | Oui | Oui |

Le bouchon inférieur 27 peut être réalisé à partir d'un procédé comprenant par exemple les étapes suivantes :

- fourniture d'une ébauche cylindrique en acier inoxydable austénitique obtenue par laminage à chaud,
- hypertrempe avec un chauffage à une température adaptée à la nature massive de la pièce, généralement comprise entre 1050 et 1150°C,
- redressage,
- rectification sans centre ou centerless,
- façonnage par usinage,
- finition.

Le bouchon inférieur 27 est emmanché sur l'extrémité de la gaine 21 correspondante et soudé par exemple par soudage TIG (Tungsten Inert Gas) sous atmosphère protectrice afin d'éviter l'oxydation.

La gaine 21 et son bouchon inférieur 27, sont ensuite soumis à une étape de durcissement de leurs surfaces extérieures respectives 29 et 31 par diffusion d'espèce(s) atomique(s).

Il peut s'agir d'une étape de nitruration telle que celles décrites dans les documents FR-2 604 188, EP-446 083, EP-537 062 et EP-801 142.

De préférence, il s'agit d'une étape de carbonitruration ou de nitrocarburation, par exemple telle que décrite dans le document EP-801 142.

Ainsi, on peut, par exemple soumettre la gaine 21 et son bouchon inférieur 27 à une atmosphère gazeuse contenant de l'azote, de l'hydrogène et un hydrocarbure, activée par plasma, à une température de traitement comprise entre 340 et 450°C et, de préférence, entre 400 et 420°C.

Les couches de la gaine 21 et du bouchon 27 voisines de leurs surfaces extérieures 29 et 31 respectives se chargent en carbone et en azote de telle sorte que se forme dans l'acier de ces couches superficielles, dont l'épaisseur peut être comprise entre 10 et 60 $\mu$m, une solution solide de carbone et d'azote.

Plus généralement, d'autres étapes de durcissement des surfaces extérieures 29 et 31, par diffusion d'espèce(s) atomique(s), que celles décrites ci-dessus peuvent être utilisées : nitruration gazeuse, cémentation ionique...

Les couches superficielles ainsi formées sur les gaines 21 et les bouchons 27 procurent une résistance accrue contre l'usure.

La demanderesse a également établi que les gaines 21 et les bouchons inférieurs 27 obtenus par les procédés décrits ci-dessus présentent, après l'étape de durcissement, une bonne résistance à la corrosion, et en particulier une résistance à la corrosion meilleure que celle des gaines et bouchons obtenus grâce aux procédés de l'état de la technique.

Grâce à la mise en oeuvre d'une ou plusieurs hypertrempe(s) telle(s) que décrite(s) ci-dessus, la démixtion de l'austénite chargée en azote de la couche superficielle en nitrure de chrome et en phase métallique appauvrie en chrome lors de l'étape de nitruration est réduite.

Une telle démixtion peut être traduite par la formule :

$$\gamma_N \rightarrow \gamma_{N-x} + \alpha + CrN$$

où $\gamma_N$ représente l'austénite chargée en azote

$\gamma_{N-x}$ représente l'austénite moins chargée en azote

$\alpha$ représente la ferrite et CrN du nitrure de chrome.

Les risques de corrosion des surfaces extérieures 29 des gaines 21 et des surfaces extérieures 31 des bouchons inférieurs 27 lors de leur utilisation sont donc réduits.

Par ailleurs, une faible teneur en carbone permet de réduire la présence de germes de carbure, germes qui pourraient induire la formation de carbonitrures pendant l'étape de nitruration et également provoquer la démixtion de l'austénite dans la couche superficielle. Cette caractéristique contribue donc également à réduire la sensibilité et la corrosion.

La ou les hypertrempe(s) peu(ven)t avoir lieu avant la fourniture de l'ébauche et/ou pendant l'étape de façonnage ou de finition.

De plus, comme exposé ultérieurement, l'absence de soudure dans les ébauches tubulaires permet également de réduire la sensibilité à la corrosion des gaines 21.

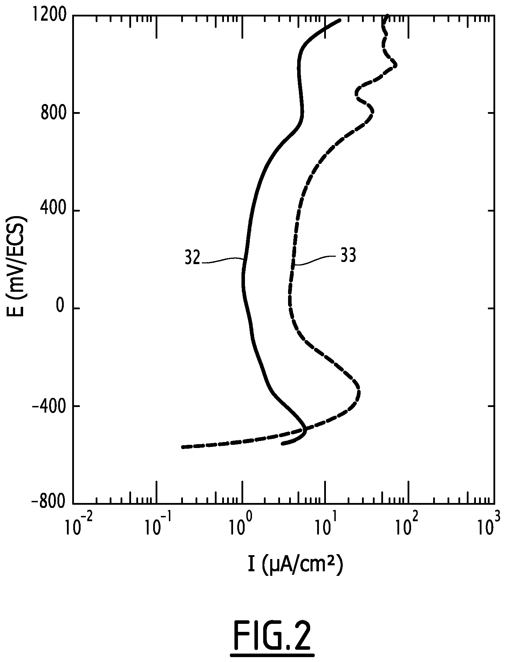

La figure 2 montre les courbes intensité/potentiel, ou courbes de polarisation, en solution d'acide borique (2000ppm de B sous forme $H_3BO_3$ et 1000ppm de $SO_4^{2-}$) désaérée, à 70°C, pour des gaines 21 en AISI 316L obtenues comme décrit précédemment avant nitruration (courbe 32) et après nitruration (courbe 33).

Le courant de corrosion est reporté sur l'axe des abscisses et est exprimé en $\mu A/cm^2$ et le potentiel sur l'axe des ordonnées en mV par rapport à l'électrode au calomel saturé (mV/ECS). Comme on peut le constater, la sensibilité à la corrosion des gaines 21 est faible avant nitruration alors qu'elle peut être 8 fois plus importante pour les gaines 21 nitrurées.

En se plaçant au pic d'activité des aciers inoxydables austénitiques non nitrurés, on peut suivre l'évolution du courant de corrosion lors d'un test potentiostatique ainsi que celle de la quantité de courant, cette quantité de courant étant en lien avec la quantité de matière corrodable d'après la loi de Faraday.

Compte tenu de la composition des aciers utilisés (AISI 304L et AISI 316L) et des valences respectives des éléments corrodables fer et nickel, en se plaçant au pic d'activité (-490mV/ECS pour ces aciers) 2.4 à 2.7C/$cm^2$ correspondent environ à 1$\mu$m d'épaisseur corrodable .

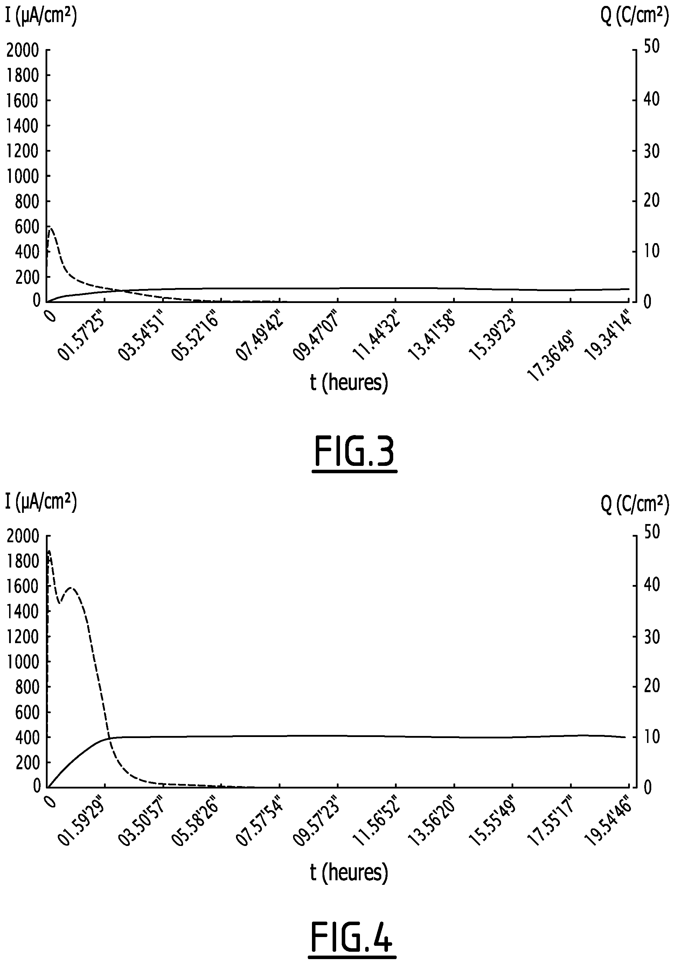

Les figures 3 à 5 permettent de comparer les résultats de tests potentiostatiques sur différentes gaines nitrurées dont une nitrurée à une température trop élevée. Sur ces figures, la courbe en pointillés représente le courant de corrosion I en $\mu A/cm^2$ et la courbe en trait plein la quantité de courant de corrosion Q en C/$cm^2$.

Pour chacun de ces trois tests, on se place donc au pic d'activité (- 490 mV/ECS) et dans une solution d'acide borique (2000ppm de B sous forme $H_3BO_3$ et 1000ppm de $SO_4^{2-}$) désaérée, à 70°C.

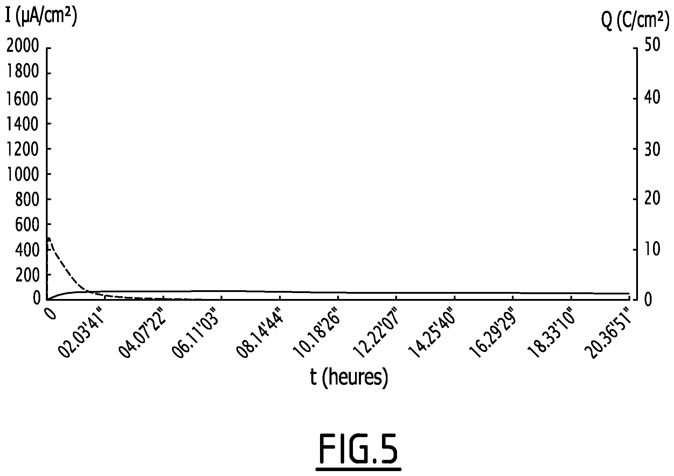

Les figures 3 et 4 illustrent respectivement des gaines 21 réalisées en acier AISI 304L. Ces deux gaines se distinguent en ce que celle de la figure 4 a été nitrurée à une température trop élevée. La figure 5 concerne une gaine 21 obtenue à partir d'acier AISI 316L et nitrurée convenablement. Les quantités de courant de corrosion Q mesurées sont respectivement de 2,37C/$cm^2$, 10,03C$m^2$ et 1,53C/$cm^2$, sachant que la quantité de courant de corrosion d'un acier inoxydable austénitique non nitruré est 0.00C/$cm^2$.

Les résultats de ces tests potentiostatiques sont en bon accord avec les micrographies : la sensibilité à la corrosion d'une couche nitrurée, signalée par un courant élevé, est révélée aussi par l'attaque visible sur des coupes métallographiques.

Un critère d'acceptation de la sensibilité à la corrosion peut donc être proposé sur la base de la quantité de courant de corrosion Q mesurée lors de tests potentiostatiques. La valeur retenue est de 3C/$cm^2$, les valeurs de Q mesurées devant être inférieures pour que la pièce analysée présente une résistance à la corrosion satisfaisante.

Conformément aux courbes des figures 3 et 5, les gaines 21 en AISI 304L et en AISI 316L présentent donc une sensibilité à la corrosion après nitruration inférieure à 3C/$cm^2$.

Cependant, on a constaté que certains bouchons 27 en AISI 308L, qui n'avaient pas été obtenus selon un procédé tel que décrit ci-dessus, et qui avaient été soudés au bas de ces gaines 21 et avaient été nitrurés en même temps pouvaient présenter une sensibilité à la corrosion plus importante (jusqu'à 12C/$cm^2$) malgré une teneur en chrome, et donc une inoxydabilité théorique, plus importante.

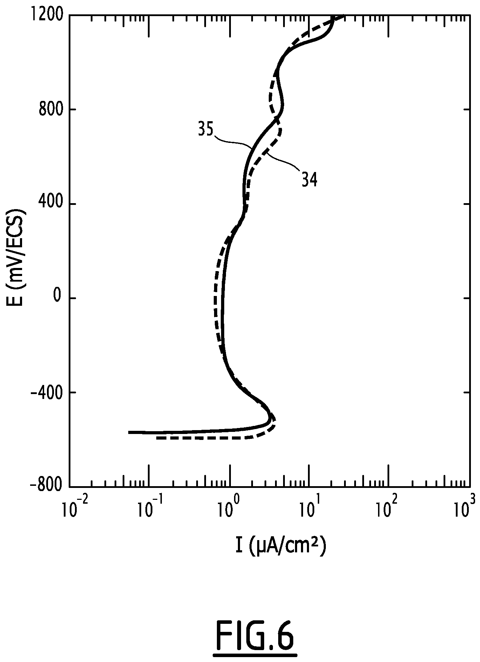

La figure 6 montre les courbes intensité/potentiel dans la solution d'acide borique précitée pour une gaine 21 en AISI 316 obtenue à partir d'une ébauche, contenant 0.046 % de carbone en masse, avec soudure (courbe 34) et une gaine 21 en AISI 316L obtenue à partir d'une ébauche, contenant 0.02% de carbone en masse, dépourvue de soudure (courbe 35).

Comme on peut le constater, avant nitruration, la sensibilité à la corrosion des gaines 21 est analogue, qu'elles soient obtenues à partir d'ébauches avec ou sans soudure, malgré la différence de teneur en carbone des aciers.

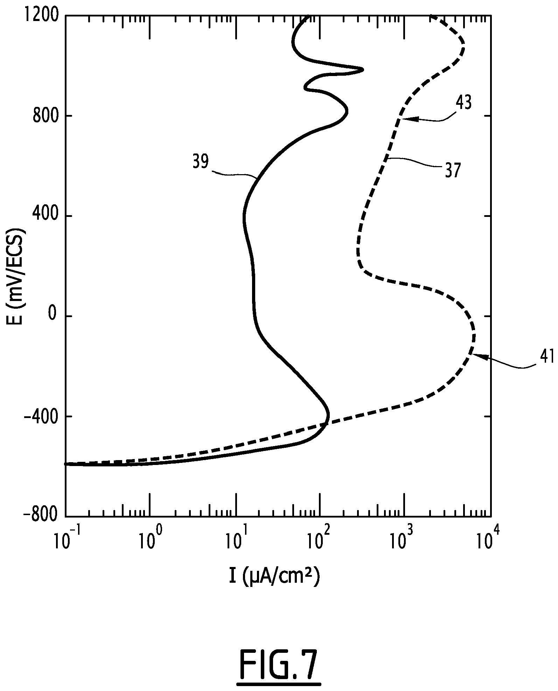

La figure 7 permet de comparer les courbes intensité/potentiel après nitruration dans les mêmes conditions des mêmes gaines 21 provenant d'ébauches avec soudure (courbe 37) et sans soudure (courbe 39).

Comme on peut le constater, l'intensité du courant est environ 50 fois supérieure au niveau du pic de corrosion 41 et environ 25 fois supérieure au niveau du plateau de passivation 43 pour la courbe 37 par rapport à la courbe 39.

Ainsi, l'utilisation de gaines 21 issues d'ébauches tubulaires dépourvues de soudure et à faible teneur en carbone permet de diminuer significativement la sensibilité à la corrosion après nitruration des gaines 21.

Une explication possible est que l'absence de maîtrise de la température au chauffage et au refroidissement lors du soudage des ébauches provoque une sensibilisation non seulement de la zone soudée et de la zone affectée thermiquement, mais également de l'ensemble de l'ébauche dans le cas d'une ébauche tubulaire. Cette sensibilisation pourrait se révéler lors de la nitruration ultérieure, par la démixtion de l'austénite.

Par ailleurs, le tableau 3 ci-dessous permet de comparer la sensibilité à la corrosion après nitruration de gaines 21 obtenues à partir d'ébauches soudées et sans soudure, avec réalisation (cas 1, 3 et 4) ou non (cas 2) avant nitruration d'un traitement d'hypertrempe tel que décrit ci-dessus, cette hypertrempe permettant la remise en solution des précipités et l'élimination des contraintes résiduelles issues du façonnage.

Tableau 3

| Cas | Ebauche soudée | Durée et température de chauffage de l'hypertrempe | Teneur massique en C en % | Sensibilité à la corrosion après nitruration Q en C/cm$^2$ |
|---|---|---|---|---|
| 1 | non | 3mn à 1040°C | 0.02 | 2,9 |
| 2 | oui | 2 à 4mn à 996°C | 0.046 | >35 |
| 3 | oui | 2 à 4mn à 996°C puis 3mn à 1040°C | 0.046 | ~ 11 |
| 4 | oui | 2 à 4mn à 996°C puis 20mn à 1080°C | 0.046 | 5,2 |

On constate donc que l'utilisation d'ébauches non-soudées à faible teneur en carbone d'une part et la mise en oeuvre d'une hypertrempe poussée permettant de faire disparaître les précipités d'autre part permettent de diminuer significativement et indépendamment la sensibilité à la corrosion.

Même après une hypertrempe poussée, la sensibilité à la corrosion reste cependant affectée par la teneur en carbone relativement élevée (cas 2 et 3).

Si l'utilisation des ébauches tubulaires non soudées est préférée, on peut également utiliser d'ébauches roulées-soudées sous réserve de les soumettre après soudage à un traitement d'hypertrempe poussée tel que décrit ci-dessus, qui permettra une remise en solution des précipités.

Plus généralement, on a constaté de manière surprenante que les traitements de finition, après l'étape d'étirage final du façonnage, tels que les opérations de rectification, de brossage, de polissage ou de lustrage, pouvaient avoir un impact sur la résistance à la corrosion des gaines 21 nitrurées.

Ainsi le tableau 4 ci-dessous compare la sensibilité à la corrosion de gaines 21 nitrurées présentant divers états de surface obtenus en mettant en oeuvre ou non des opérations de polissage ou lustrage avant l'étape de nitruration et après l'étape de façonnage. Les duretés et rugosités mesurées l'ont été sur les surfaces extérieures 29 des gaines 21 après nitruration.

Tableau 4

| | Cas 1 | Cas 2 | Cas 3 |
|---|---|---|---|
| | | | |
| Polissage | Oui | Non | Non |
| Lustrage | Oui | Oui | Non |
| Rugosité arithmétique Ra | 0.19-0.21 | 0.31-0.64 | 0.29-0.44 |
| | | | |
| Dureté HV50 | 1038 | 1038 | 1107 |
| Dureté HV100 | 1097 | 1048 | 1105 |
| | | | |
| Epaisseur en $\mu$m (des couches durcies) | 18 | 17.8 | 17.3 |
| Q en C/cm$^2$ | 1.65 | 1.04 | 0.5 |

L'écrouissage superficiel introduit par des traitements mécaniques de finition augmente donc la sensibilité à la corrosion après nitruration (perte d'au moins 0.5 C/m$^2$ tant pour le polissage que pour le lustrage).

De préférence, on utilisera donc des pièces, qui n'ont pas été soumises à de telles étapes mécaniques de finition avant l'étape de durcissement pour former les gaines 21, les bouchons 27 et plus généralement toute autre pièce pouvant être utilisée dans un réacteur nucléaire et devant présenter une bonne résistance à l'usure et à la corrosion.

La présence de tels traitements mécaniques de finition peut expliquer la sensibilité à la corrosion constatée sur certains bouchons inférieurs 27 lors des tests potentiostatiques des figures 3 à 5.

En ce qui concerne les bouchons 27 et plus généralement toute autre pièce usinée pouvant être utilisée dans un réacteur nucléaire et devant présenter une bonne résistance à l'usure et à la corrosion telles que broches de guidage, écrous et vis, ... il n'est pas toujours possible de piloter l'opération d'usinage pour éviter la formation d'une couche superficielle écrouie qui conduira lors d'un traitement de durcissement ultérieur à une dégradation de la sensibilité à la corrosion.

Le tableau 5 ci-après rend compte des profondeurs écrouies pour différents modes d'élaboration des surfaces (d'après L.E. Samuels and G.G Wallwork, J. Iron Steel Inst. 186 (1957) 211).

Tableau 5

| Traitement mécanique | | Epaisseur des couches de métal déformées (en $\mu$m) |
| --- | --- | --- |
| Polissage papier | SiCN° 220 | 6 |
| | 400 | 2.5 |
| | 600 | 2.2 |
| Polissage papier Emeri | 1/0 | 5 |
| | 2/0 | 4 |
| | 3/0 | 4 |
| | 4/0 | 4 |
| Pâte abrasive à l'alumine | | 1.5 |
| Fraisage | | 45 |
| Rectification à la meule | | 35 |

Quoi qu'il en soit, des traitements intervenant après l'étape de façonnage et avant l'étape de nitruration des pièces permettent d'éviter cette dégradation en éliminant l'écrouissage des couches superficielles. Quatre exemples de tels traitements sont donnés ci-dessous. Ces traitements peuvent éventuellement être combinés.

Un premier traitement comprend une hypertrempe dans les conditions définies ci-dessus. Cette hypertrempe permet de remettre en solution les carbures et nitrures, formés par exemple lors d'un usinage, ainsi que les microprécipités de phase martensitique qui sont autant de germes à la démixtion de l'austénite lors de la nitruration. L'hypertrempe permet aussi d'éliminer les contraintes mécaniques superficielles qui favorisent aussi cette démixtion de l'austénite lors de l'étape de durcissement. Ce traitement n'est cependant pas applicable si on veut conserver aux pièces un état écroui dans la masse, gage de propriétés mécaniques supérieures, mais ce n'est pas, à titre d'exemple, le cas des bouchons 27.

Un deuxième traitement comprend un décapage chimique par exemple à base d'acide nitrique ou fluonitrique, d'eau régale... Le décapage peut également être électrochimique à l'aide d'un bain, d'une pâte ou d'un gel acide durant 15 à 120 minutes, ou plus rapidement avec une assistance électrochimique. Le décapage permet par exemple de dissoudre les couches superficielles appauvries en chrome métallique sur 0.5 à 5$\mu$m. Ainsi, la sensibilisation à la corrosion lors l'étape de durcissement pourra être limitée voire supprimée. Ce traitement reste compatible avec le maintien des propriétés mécaniques apportées par un écrouissage dans la masse.

Un troisième traitement comprend un décapage par plasma radiofréquence pendant 2 à 4h à 250°C sous atmosphère Ar-H$_2$. Le décapage permet de pulvériser les couches superficielles appauvries en chrome métallique par exemple sur 0.5 à 5$\mu$m et donc de réduire la sensibilité à la corrosion après nitruration. Un tel traitement a été appliqué avant nitruration par exemple sur des broches usinées en AISI 316L. La profondeur diffusée atteint lors d'une nitro-carburation de 80h à 400°C+/-20°C dépasse 20$\mu$m. Toutefois, il faut de préférence éviter de poursuivre le décapage par plasma radiofréquence au-delà de 8h car la surface pourrait être trop activée et pourrait précipiter l'azote en CrN dès son arrivée lors de la phase de nitruration. Ainsi la sensibilité à la corrosion mesurée par test potentiostatique s'élève de 3E-08C/cm$^2$ pour 2h de décapage, à plus de 10C/cm$^2$ au delà de 8h de décapage.

Un quatrième traitement comprend une tribofinition en utilisant successivement des abrasifs de plus en plus fins. La profondeur éliminée, sans pour autant provoquer d'échauffement donc de contraintes superficielles de traction, ni perturber les couches sous jacentes, peut atteindre 10$\mu$m en quelques heures, en général moins de 3 heures, ce qui est suffisant pour éliminer l'épaisseur la plus perturbée lors d'un usinage. La sensibilité à la corrosion n'est alors pas affectée par le traitement ultérieur de durcissement. La tribofinition peut être mise en oeuvre par vibration d'abrasifs au contact des pièces, les pièces et les abrasifs étant placés dans une enceinte vibrante.

Les traitements d'élimination de l'écrouissage des couches superficielles seront de préférence utilisés pour les pièces dont le façonnage fait intervenir un enlèvement de matière avec risque d'échauffement localisé et temporaire et de création de contraintes superficielles de traction tel qu'un usinage.

Pour les pièces obtenues par un façonnage sans enlèvement de matière, comme les gaines, on préférera mettre en oeuvre des traitements de finition permettant d'éviter l'apparition d'un écrouissage et en particulier des contraintes superficielles de traction à la surface externe.

Plus généralement, les caractéristiques décrites ci-dessus peuvent être utilisés indépendamment les unes des autres et n'être appliquées, par exemple dans le cas d'une grappe de commande 3, qu'à certains des crayons 13.

Ainsi, on peut utiliser par exemple une faible teneur en carbone, indépendamment d'une hypertrempe et indépendamment de l'absence d'étapes de finition.

De même, on peut appliquer certaines caractéristiques ci-dessus à des ébauches tubulaires avec soudure.

## Revendications

**1.** Procédé de réalisation d'une pièce (21, 27) en acier inoxydable résistant à l'usure et à la corrosion pour réacteur nucléaire, ledit procédé comprenant des étapes de :

- fourniture d'une ébauche en acier inoxydable,
- façonnage de l'ébauche,
- finition de l'ébauche pour former la pièce (21, 27) en acier inoxydable, l'étape de finition permettant :

- d'éviter l'apparition d'un écrouissage à la surface extérieure (29, 31) de la pièce (21, 27), ou
- d'éliminer un écrouissage à la surface extérieure (29, 31) de la pièce (21, 27), l'étape de finition permettant d'enlever des couches superficielles à la surface extérieure (29, 31) de la pièce (21, 27), l'étape de finition comprenant au moins une tribofinition de la surface extérieure (29, 31) de la pièce (21, 27) en acier inoxydable,

- durcissement de la surface extérieure (29, 31) de la pièce (21, 27) par diffusion d'espèce(s) atomique(s).

**2.** Procédé selon la revendication 1, dans lequel l'ébauche est en acier inoxydable austénitique, et dans lequel l'ébauche est soumise avant l'étape de fourniture ou pendant l'étape de façonnage ou de finition à au moins une hypertrempe avec des sous-étapes de :

- chauffage de l'ébauche à une température et pendant une durée suffisantes pour mettre en solution les précipités éventuellement présents,
- trempe de l'ébauche à une vitesse permettant de conserver à température ambiante la structure austénitique à l'état métastable et exempte de précipités.

**3.** Procédé selon la revendication 2, dans lequel la sous-étape de chauffage est menée à une température comprise entre 1020°C et 1150°C,.

**4.** Procédé selon la revendication 2 ou 3, dans lequel la sous-étape de chauffage est menée pendant une durée comprise entre 1 minute 30 secondes et 30 minutes, de préférence entre 3 et 10 minutes.

**5.** Procédé selon l'une quelconque des revendications 2 à 4, dans lequel, lors de la sous-étape de trempe, l'ébauche est refroidie de la température de début de trempe jusqu'à moins de 850°C en moins de 3 minutes et jusqu'à moins de 450°C en moins d'une heure.

**6.** Procédé selon l'une quelconque des revendications 2 à 5, dans lequel ladite hypertrempe n'est pas suivie lors de l'étape de façonnage ou lors de l'étape de finition d'une rectification, d'un brossage, d'un polissage ou d'un lustrage.

**7.** Procédé l'une quelconque des revendications 2 à 5, dans lequel l'étape de finition permet d'éliminer un écrouissage à la surface extérieure (29, 31) de la pièce (21, 27).

**8.** Procédé selon la revendication 7, dans lequel ladite hypertrempe a lieu lors de l'étape de finition.

9. Procédé selon l'une quelconque des revendications précédentes, dans lequel l'étape de finition comprend un décapage de la surface extérieure (29, 31) de la pièce (21, 27) en acier inoxydable.

10. Procédé selon l'une quelconque des revendications précédentes, dans lequel l'acier inoxydable est un acier inoxydable austénitique avec une teneur en carbone inférieure ou égale à 0.03% en masse.

11. Procédé selon l'une quelconque des revendications précédentes, dans lequel l'étape de durcissement de la surface extérieure (29, 31) de la pièce (21, 27) comprend une nitruration par plasma, par exemple une carbonitruration ou une nitrocarburation.

12. Procédé selon l'une quelconque des revendications 1 à 10, dans lequel l'étape de durcissement de la surface extérieure (29, 31) de la pièce (21, 27) comprend une carburation ou une cémentation.

13. Pièce (21, 27) en acier inoxydable obtenue par un procédé selon l'une quelconque des revendications précédentes, la pièce étant une gaine (21) ou un bouchon (27) d'obturation d'une gaine (21).

14. Grappe (3) de commande pour réacteur nucléaire à eau pressurisée comportant une araignée (15) et des crayons absorbants (13) portés par l'araignée, les crayons absorbants (13) comprenant des gaines (21) renfermant au moins un matériau (23) absorbant les neutrons et des bouchons (25, 27) d'obturation des gaines (21), **caractérisée en ce que** les gaines (21) et/ou des bouchons (27) de certains au moins des crayons absorbants (13) sont des pièces selon la revendication 13.


**Patentansprüche**

1. Verfahren zur Realisierung eines Bauteils (21, 27) aus rostfreiem Stahl, der gegenüber Verschleiß und Korrosion resistent ist, für einen Kernreaktor, wobei das Verfahren die Schritte aufweist:

   - Bereitstellen eines Rohlings aus rostfreiem Stahl,
   - formgebendes Bearbeiten des Rohlings,
   - Fertigbearbeiten des Rohlings zum Bilden des Bauteils (21, 27) aus rostfreiem Stahl, wobei der Schritt des Fertigbearbeitens erlaubt:

      - das Auftreten einer Kaltverformung an der Außenfläche (29, 31) des Bauteils (21, 27) zu verhindern, oder
      - eine Kaltverformung an der Außenfläche (29, 31) des Bauteils (21, 27) zu beseitigen, wobei der Schritt des Fertigbearbeitens es erlaubt, oberflächliche Schichten an der Außenfläche (29, 31) des Bauteils (21, 27) zu entfernen, wobei der Schritt des Fertigbearbeitens aufweist wenigstens ein Tribo-Fertigbearbeiten der Außenfläche (29, 31) des Bauteils (21, 27) aus rostfreiem Stahl,

      - Härten der Außenfläche (29, 31) des Bauteils (21, 27) mittels Diffusion einer/von Atom-Art/en.

2. Verfahren gemäß Anspruch 1, wobei der Rohling aus austenitischem rostfreiem Stahl ist, und wobei der Rohling vor dem Schritt des Bereitstellens oder während des Schritts des formgebenden Bearbeitens oder des Fertigbearbeitens wenigstens einem Überhärten unterworfen wird mit den Unterschritten:

      - Erwärmen des Rohlings auf eine Temperatur und während einer Dauer, die genügen, um die gegebenenfalls vorliegenden Ausfällungen in Lösung zu bringen,
      - Abschrecken des Rohlings mit einer Geschwindigkeit, die es erlaubt, bei Umgebungstemperatur die austenitische Struktur im metastabilen Zustand und frei von Ausfällungen zu erhalten.

3. Verfahren gemäß Anspruch 2, wobei der Unterschritt des Erwärmens bei einer Temperatur durchgeführt wird, die zwischen 1020°C und 1150°C liegt.

4. Verfahren gemäß Anspruch 2 oder 3, wobei der Unterschritt des Erwärmens durchgeführt wird während einer Dauer, die zwischen 1 Minute 30 Sekunden und 30 Minuten, bevorzugt zwischen 3 und 10 Minuten, liegt.

5. Verfahren gemäß irgendeinem der Ansprüche 2 bis 4, wobei, während des Unterschritts des Abschreckens, der Rohling abgekühlt wird von der Abschreck-Anfangstemperatur bis auf wenigstens 850°C in weniger als 3 Minuten und bis auf wenigstens 450°C in weniger als einer Stunde.

6. Verfahren gemäß irgendeinem der Ansprüche 2 bis 5, wobei das besagte Überhärten während des Schritts des formgebenden Bearbeitens oder während des Schritts des Fertigbearbeitens nicht gefolgt wird von einem Schleifbearbeiten, einem Bürstbearbeiten, einem Polierbearbeiten oder einem Satinierbearbeiten.

7. Verfahren gemäß irgendeinem der Ansprüche 2 bis 5, wobei der Schritt des Fertigbearbeitens es erlaubt, eine Kaltverformung an der Außenfläche (29, 31) des Bauteils (21, 27) zu beseitigen.

8. Verfahren gemäß Anspruch 7, wobei das Überhärten während des Schritts des Fertigbearbeitens erfolgt.

9. Verfahren gemäß irgendeinem der vorhergehenden Ansprüche, wobei der Schritt des Fertigbearbeitens aufweist ein Abtragen von der Außenfläche (29, 31) des Bauteils (21, 27) aus rostfreiem Stahl.

10. Verfahren gemäß irgendeinem der vorhergehenden Ansprüche, wobei der rostfreie Stahl ein austenitischer rostfreier Stahl ist mit einem Gehalt an Kohlenstoff kleiner oder gleich 0,03 Massen-%.

11. Verfahren gemäß irgendeinem der vorhergehenden Ansprüche, wobei der Schritt des Härtens der Außenfläche (29, 31) des Bauteils (21, 27) aufweist ein Plasma-Nitrieren, zum Beispiel ein Karbonitrieren oder ein Nitrokarburieren.

12. Verfahren gemäß irgendeinem der Ansprüche 1 bis 10, wobei der Schritt des Härtens der Außenfläche (29, 31) des Bauteils (21, 27) aufweist ein Karburieren oder ein Einsatzhärten.

13. Bauteil (21, 27) aus rostfreiem Stahl, das erhalten wird durch ein Verfahren gemäß irgendeinem der vorhergehenden Ansprüche, wobei das Bauteil eine Hülle (21) oder einen Stopfen (27) zum Verschluss einer Hülle (21) ist.

14. Farm (3) zur Steuerung eines Druckwasser-Kernreaktors, aufweisend eine Spinne (15) und Absorbier-Stangen (13), die von der Spinne getragen werden, wobei die Absorbier-Stangen (13) aufweisen Hüllen (21), die wenigstens ein Material (23) umschließen, das Neutronen absorbiert, und Stopfen (25, 27) zum Verschluss der Hüllen (21), **dadurch gekennzeichnet, dass** die Hüllen (21) und/oder die Stopfen (27) von zumindest einigen der Absorbier-Stangen (13) Bauteile gemäß Anspruch 13 sind.

**Claims**

1. A method for manufacturing a part (21, 27) in stainless steel resistant to wear and corrosion for nuclear reactor, the said method comprising the steps of:

   - providing a blank in stainless steel;
   - shaping the blank;
   - finishing the blank to form the part (21, 27) in stainless steel, the finishing step allowing:

      - the prevented onset of a work hardness at the outer surface (29, 31) of the part (21, 27), or
      - the removal of work hardness on the outer surface (29, 31) of the part (21, 27), the finishing step allowing the removal of surface layers on the outer surface (29, 31) of the part (21, 27), the finishing step comprising at least one tribo-finishing of the outer surface (29, 31) of the part (21, 27) in stainless steel,

   - hardening the outer surface (29, 31) of the part (21, 27) by diffusing one or more atomic species.

2. The method according to claim 1 wherein the blank is in austenitic stainless steel and wherein the blank is subjected, before the providing step or during the shaping or finishing step, to at least one solution annealing with sub-steps of:

   - heating the blank to a sufficient temperature and for a sufficient time to solubilise any precipitates present;
   - quenching the blank at a rate allowing the austenitic structure to be maintained in the metastable state at ambient temperature and free of precipitates.

3. The method according to claim 2 wherein the heating sub-step is conducted at a temperature between 1020°C and 1150°C.

4. The method according to claim 2 or 3 wherein the heating sub-step is conducted for a time of between 1 minute 30 seconds and 30 minutes, preferably between 3 and 10 minutes.

5. The method according to any of claims 2 to 4 wherein during the quench sub-step the blank is cooled from the quench start temperature down to lower than 850°C in less than 3 minutes and down to lower than 450°C in less than one hour.

6. The method according to any of claims 2 to 5 wherein the said solution annealing is not followed during the shaping step or during the finishing step by grinding, brushing, polishing or buffing.

7. The method according to any of claims 2 to 5 wherein the finishing step allows the removal of work hardness on the outer surface (29, 31) of the part (21, 27).

8. The method according to claim 7 wherein the said solution annealing takes place during the finishing step.

9. The method according to any one of the preceding claims, wherein the finishing step comprises a stripping of the outer surface (29, 31) of the part (21, 27) in stainless steel.

10. The method according to any of the preceding claims wherein the stainless steel is an austenitic stainless steel with a carbon content equal to or lower than 0.03 % by weight.

11. The method according to any of the preceding claims wherein the hardening step of the outer surface (29, 31) of the part (21, 27) comprises plasma nitriding, for example carbonitriding or nitrocarburizing.

12. The method according to any of claims 1 to 10 wherein the hardening step of the outer surface (29, 31) of the part (21, 27) comprises carburizing or case hardening.

13. A part (21, 27) in stainless steel obtained using a method according to any of the preceding claims, said part being a cladding (21) or end plug (27) of a cladding (21).

14. A control cluster (3) for pressurized water nuclear reactor comprising a spider structure (15) and absorber rods (13) carried by the spider, the absorber rods (13) comprising claddings (21) containing at least one neutron-absorbing material (23) and end plugs (25, 27) closing the claddings (21), **characterized in that** the claddings (21) and/or end plugs (27) of at least some of the absorber rods (13) are parts according to claim 13.

FIG.1

FIG.2

## FIG.3

## FIG.4

I (µA/cm²)　　　　　　　　　　　　　　　　　　Q (C/cm²)

t (heures)

FIG.5

## FIG.6

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2604188
- EP 446083 A
- EP 537062 A
- EP 801142 A

**Littérature non-brevet citée dans la description**

- **J. OLFE et al.** Verschleißschutz und korrosionsbeständigkeit von austenitischem Stahl durch Plasmadiffusionsbehandlung. *procédé de nitruration d'un acier inoxydable austénitique*
- **L.E. SAMUELS ; G.G WALLWORK.** *J. Iron Steel Inst.,* 1957, vol. 186, 211